# FASCICULE DE BREVET EUROPEEN

(11) **EP 2 561 208 B1**
(45) Date de publication et mention de la délivrance du brevet: **13.05.2015**
(21) Numéro de dépôt: 11715974.9
(22) Date de dépôt: 23.03.2011
(51) Int. Cl.: F02K 1/08, F02K 1/76, B64D 29/00

(54) **NACELLE POUR MOTEUR D'AERONEF A TUYERE DE SECTION VARIABLE**
TRIEBWERKSGONDEL MIT VARIABLEN DÜSENQUERSCHNITT
AIRCRAFT ENGINE NACELLE WITH VARIABLE NOZZLE SECTION

(30) Priorité: 20.04.2010 FR 1052971
(43) Date de publication de la demande: 27.02.2013
(73) Titulaire: Aircelle, 76700 Gonfreville l'Orcher (FR)
(72) Inventeur: VAUCHEL, Guy, Bernard, F-76700 Harfleur (FR); MORADELL-CASELLAS, Pierre, F-61100 Saint Georges des Groseillers (FR); LE BOULICAUT, Loïc, F-76610 Le Havre (FR)
(74) Mandataire: Gaillarde, Frédéric F. Ch.
(86) Numéro de dépôt international: PCT/FR2011/050608
(87) Numéro de publication internationale: WO 2011/131873

(56) Documents cités:
- EP-A2- 0 779 429
- FR-A1- 2 911 372
- FR-A1- 2 922 059
- GB-A- 2 304 656
- JP-A- 2005 226 774
- US-A- 2 408 099
- US-A1- 2004 029 671
- US-B1- 7 484 356

## Description

La présente invention se rapporte à une nacelle pour moteur d'aéronef, à tuyère de section variable.

Comme cela est connu en soi, une nacelle de moteur d'aéronef permet de canaliser l'air extérieur vers ce moteur, et d'assurer l'éjection de cet air à grande vitesse de manière à fournir la poussée nécessaire.

Dans les turboréacteurs à double flux, le flux d'air brassé par la soufflante se divise, en aval de celle-ci, en un flux primaire (dit aussi « chaud ») qui rentre au coeur du turboréacteur pour y subir plusieurs compressions et une détente, et en un flux secondaire (dit aussi « froid »), qui circule à l'intérieur d'une veine sensiblement annulaire, définie d'une part par un carénage du moteur (structure interne fixe, appelée aussi « IFS »), et d'autre part par l'épaisseur de la nacelle.

Le flux d'air froid, qui sort en aval de la nacelle par une tuyère de sortie définie par le bord aval de cette nacelle, fournit l'essentiel de la poussée.

Pour des raisons d'optimisation aérodynamique, et par là même d'optimisation de la consommation de carburant, il est tout à fait avantageux de pouvoir régler la section de la sortie du flux d'air froid en aval de la nacelle : il est en effet utile de pouvoir augmenter cette section lors des phases de décollage et d'atterrissage, et de la réduire pendant les phases de croisière : on parle souvent de tuyère adaptative, ou bien encore de « VFN » (Variable Fan Nozzle).

Une telle nacelle est montrée dans le document EP 0 779 429.

Par ailleurs, comme cela est connu en soi, la nacelle incorpore très fréquemment des moyens d'inversion de poussée, permettant de diriger vers l'amont de la nacelle une partie du flux d'air secondaire lors de l'atterrissage, ce qui contribue activement au freinage de l'aéronef.

Ces moyens d'inversion de poussée sont souvent du type à grilles de déviation, c'est-à-dire qu'ils comportent une série de grilles disposées en aval du carter de soufflante, à la périphérie de la veine de flux froid, ces grilles pouvant être découvertes sur commande par un capot d'inversion de poussée monté coulissant sur la structure de la nacelle.

La tuyère de sortie du flux d'air secondaire est située dans le prolongement aval du capot d'inversion de poussée, et il importe de pouvoir actionner ces deux parties de la nacelle de manière indépendante : on veut en particulier pourvoir augmenter la section de la tuyère sans actionner les moyens d'inversion de poussée, en particulier lors du décollage.

Diverses solutions existent dans l'état de la technique pour actionner ces organes indépendamment l'un de l'autre.

Une solution connue consiste à prévoir des vérins d'actionnement indépendants pour ces deux organes.

Une autre solution connue consiste à utiliser des vérins à double tige, une tige actionnant le capot d'inversion de poussée, et l'autre tige actionnant la tuyère de sortie.

Encore une autre solution consiste à utiliser des vérins actionnant uniquement la tuyère de sortie, et à prévoir des moyens de verrouillage commandés du capot d'inversion à la tuyère, que l'on ferme lorsque la tuyère est en fin de course aval pour pouvoir alors entraîner le capot d'inversion de poussée, et que l'on rouvre une fois que le capot d'inversion de poussée a retrouvé sa position « jet direct », pour pouvoir ramener la tuyère de sortie dans sa position amont.

Toutes ces solutions antérieures présentent comme inconvénient notamment de présenter un poids élevé, en raison des vérins spécifiques et/ou des moyens de verrouillage employés pour permettre l'actionnement indépendant du capot d'inversion d'inverseur et de la tuyère d'éjection.

La présente invention a notamment pour but de supprimer cet inconvénient.

On atteint ce but de l'invention avec une nacelle pour moteur d'aéronef, comprenant un capot d'inversion de poussée monté coulissant entre une position de jet direct et une position de jet inversé, une tuyère de sortie de section variable disposée dans le prolongement aval de ce capot d'inversion, et des moyens d'actionnement respectif de ce capot et de cette tuyère, remarquable en ce que ladite tuyère d'éjection est montée coulissante sur ledit capot d'inversion de poussée, et lesdits moyens d'inversion de poussée comprennent :
- au moins un vérin d'actionnement dudit capot d'inversion de poussée,
- au moins un pignon moteur monté rotatif sur la structure fixe de ladite nacelle, et
- au moins une crémaillère d'actionnement de ladite tuyère d'éjection, solidaire de cette tuyère et engrenant avec ledit pignon moteur lorsque ledit capot d'inversion de poussée se trouve en position jet direct, et échappant à ce pignon lorsque ledit capot d'inversion se trouve en position de jet inversé.

Grâce à ces caractéristiques, l'actionnement indépendant de la tuyère d'éjection par rapport au capot d'inversion de poussée, est effectué au moyen d'un système du type à pignon et à crémaillère, nettement plus simple, moins encombrant et moins lourd que les divers systèmes de la technique antérieure.

Suivant d'autres caractéristiques optionnelles de la nacelle selon l'invention :
- cette nacelle comprend une pluralité de vérins d'actionnement dudit capot d'inversion de poussée, et une pluralité de dispositifs à pignon et crémaillère pour actionner ladite tuyère d'éjection ;
- lesdits dispositifs à pignon et crémaillère sont disposés au voisinage des poutres 12 heures et 6 heures de la structure fixe de ladite nacelle : ces poutres, disposées respectivement au sommet et dans la partie basse diamétralement opposée de la nacelle, permettent classiquement le montage et les déplacements des éléments mobiles de la nacelle ;
- ladite nacelle comprend des moyens pour verrouiller ladite tuyère audit capot d'inversion de poussée lorsque ladite tuyère se trouve dans sa position aval extrême et que le capot d'inversion de poussée se trouve en position de jet direct : ces moyens de verrouillage permettent de déplacer la tuyère d'éjection de concert avec le capot d'inversion de poussée sous l'action desdits vérins ;
- ladite nacelle comprend des moyens de rattrapage du jeu entre chaque pignon et sa crémaillère associée : ces moyens de rattrapage de jeu permettent au pignon de ré-engrener aisément avec les dents de la crémaillère lorsque cette dernière revient en position amont sous l'effet du déplacement amont du capot d'inversion de poussée ;
- lesdits moyens de rattrapage de jeu comprennent des moyens de suspension élastique dudit pignon sur la structure fixe de la nacelle ;
- lesdits moyens de rattrapage de jeu comprennent au moins un galet d'axe parallèle à celui dudit pignon, apte à ramener ladite crémaillère au contact dudit pignon.

D'autres caractéristiques apparaîtront à la lumière de la description qui va suivre, et à l'examen des figures ci-annexées dans lesquelles :
- la figure 1 représente, en couple axiale, la partie arrière d'une nacelle selon l'invention en configuration de croisière,
- la figure 2 représente cette partie arrière en perspective,
- la figure 3 est une vue partielle de cette partie arrière de la nacelle, prise en coupe selon le plan transversal P des figures 1 et 2,
- la figure 4 est une vue du mécanisme de coulissement de cette partie arrière de nacelle,
- la figure 5 est une vue schématique de cette partie arrière de nacelle, en configuration de croisière,
- les figures 6, 7, 8 sont de vues analogues respectivement aux figures 2, 4, 5, la tuyère de sortie de la partie arrière de nacelle se trouvant en configuration de décollage ou d'atterrissage,
- les figures 9, 10 et 11 sont analogues respectivement aux figures 1, 2 et 4, la partie arrière de nacelle se trouvant en configuration d'inversion de poussée,
- les figures 12, 13 et 14, analogues à la figure 5, représentent de manière schématique les différentes étapes du passage de la partie arrière de nacelle vers sa position d'inversion de poussée,
- la figure 15, analogue à la figure 4, représente de manière schématique le retour de la partie arrière de nacelle vers sa position des figures 6 à 8,
- la figure 16, analogue à la figure 4, représente de manière schématique le retour de la tuyère de sortie vers sa position de croisière, et
- les figures 17 et 18, analogues à la figure 3, représentent deux variantes de rattrapage du jeu entre un pignon moteur et une crémaillère solidaire de la tuyère de sortie de la partie arrière de nacelle selon l'invention.

Sur l'ensemble de ces figures, des références identiques ou analogues désignent des organes ou ensembles d'organes identiques ou analogues.

On a placé sur l'ensemble de ces figures un repère XYZ, dont les trois axes représentent respectivement les directions respectives longitudinale, transversale et verticale de la nacelle.

A noter que la flèche de l'axe X pointe vers l'amont de la nacelle, ce terme s'entendant par rapport au flux d'air destiné à traverser la nacelle en fonctionnement.

On notera également que la description qui va suivre est focalisée plus particulièrement sur une partie arrière de nacelle, c'est-à-dire sur la partie de la nacelle qui est située en aval du carter de soufflante, car c'est à cet endroit que se situe l'invention.

On notera de surcroît que l'on ne prendra soin de décrire en réalité qu'une demi-nacelle, sachant que l'autre demi-nacelle, c'est-à-dire celle qui est située de l'autre côté de la poutre de suspension, se déduit de la demi-nacelle qui va être décrite par simple symétrie par rapport à un plan vertical parallèle au plan XZ.

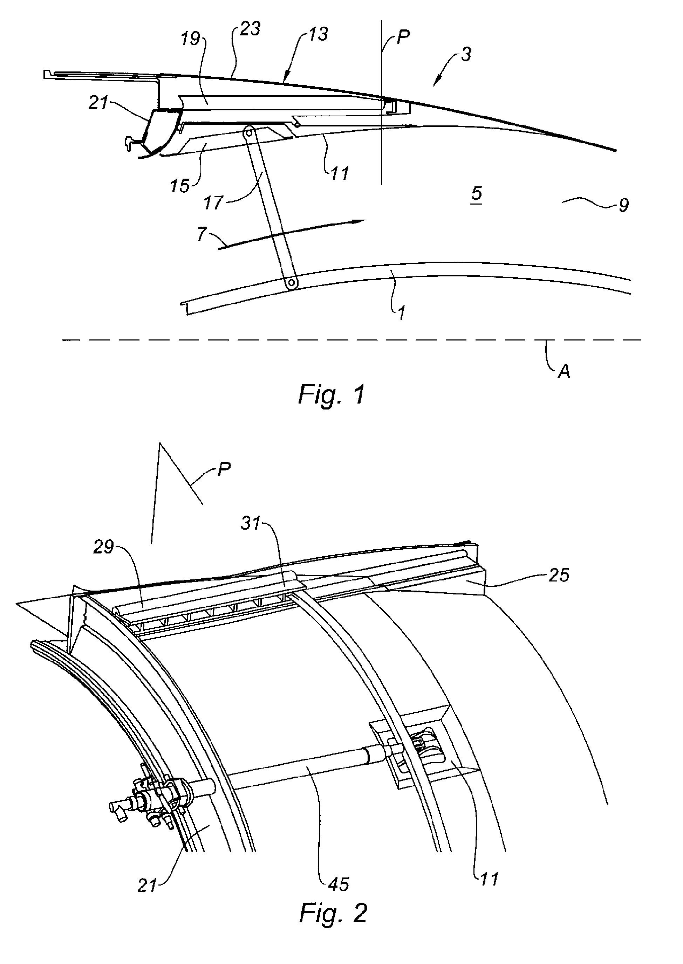

On se reporte à présent à la figure 1, sur laquelle on peut voir une partie arrière de nacelle selon l'invention en situation de croisière.

Comme cela est visible sur cette figure 1, cette partie arrière de nacelle comporte une structure intérieure fixe 1, destinée à caréner un turboréacteur (non représenté) centré autour de l'axe A et une structure extérieure 3 mobile, définissant une veine de flux d'air secondaire 5 dans laquelle doit circuler un flux d'air secondaire 7 engendré par la soufflante (non représentée), et sortant par une section de sortie 9 de manière à assurer la poussée de l'aéronef.

Plus précisément, la structure extérieure mobile 3 comporte une partie mobile radialement intérieure 11 formant capot d'inversion de poussée, et une partie radialement extérieure 13 formant tuyère de section variable.

Sur le capot d'inversion de poussée 11 sont montés articulés des volets d'inversion de poussée 15, reliés chacun à la structure interne fixe 1 par des bielles 17.

Des grilles d'inversion de poussée 19 sont montées fixes sur un cadre avant 21 de forme sensiblement annulaire, lui-même fixé en aval du carter de soufflante (non représenté).

En situation de croisière représentée à la figure 1, le capot d'inversion de poussée 11 et la partie amont 23 de la tuyère de sortie 13 recouvrent les grilles d'inversion de poussée 19, les volets d'inversion de poussée 15 étant quant à eux disposés dans le prolongement du capot d'inversion de poussée 11, de manière à permettre la libre circulation du flux d'air froid 7 dans la veine 5.

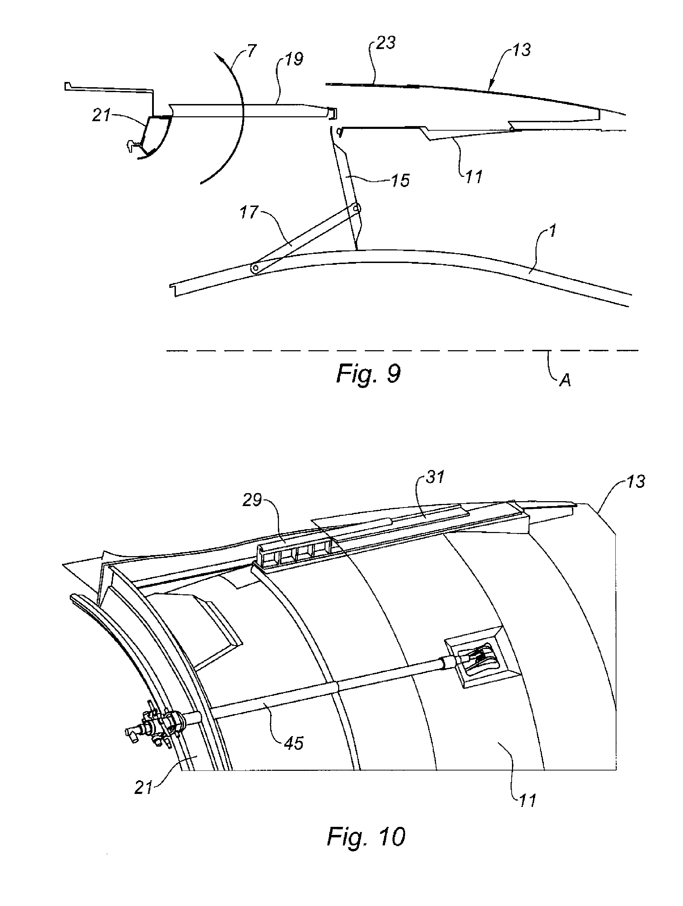

En situation d'inversion de poussée représentée à la figure 9, le capot d'inversion de poussée 11 et la tuyère se sortie 13 ont chacun coulissé en aval des grilles de déviation 19, entraînant le pivotement des volets d'inversion de poussée 15 en travers de la veine de flux secondaire 5, provoquant la déviation du flux d'air secondaire 7 à travers les grilles 19, vers l'extérieur et vers l'amont de la nacelle.

Dans ce qui suit, on va s'attacher à décrire plus en détails le mécanisme selon l'invention permettant de passer de la position de la figure 1 à la position de la figure 9.

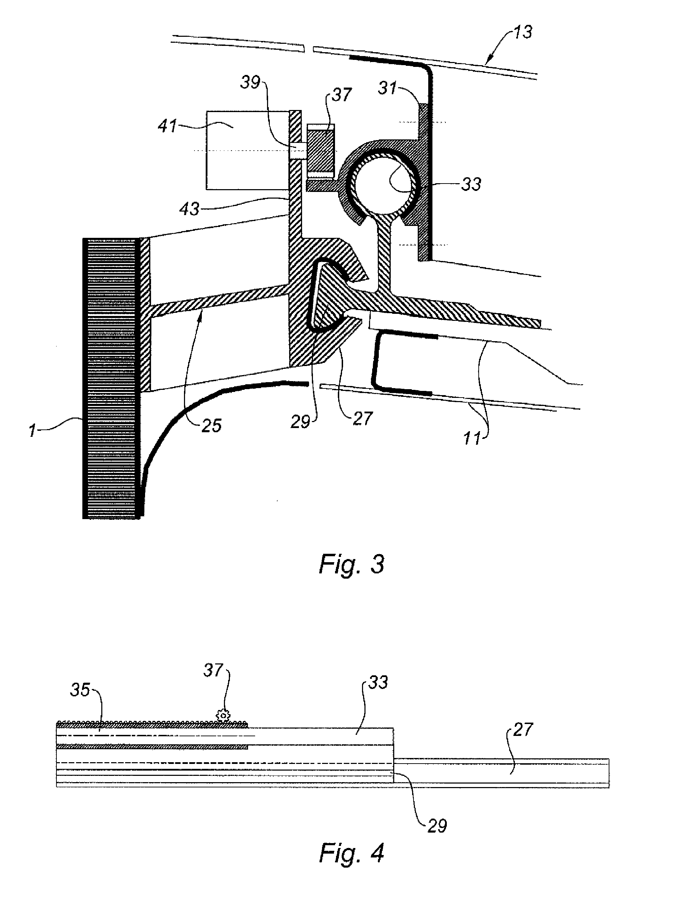

Comme cela est visible à la figure 3, le capot intérieur d'inversion de poussée 11 est relié à la structure intérieure fixe 1 par l'intermédiaire d'une poutre longitudinale 25, définissant une première glissière 27 à l'intérieur de laquelle peut coulisser un premier coulisseau longitudinal 29.

La tuyère de sortie 13 est quant à elle solidaire d'une deuxième glissière longitudinale 31 à l'intérieur de laquelle peut coulisser un deuxième coulisseau longitudinal 33, lui-même solidaire du premier coulisseau longitudinal 29.

Le long de cette deuxième glissière 31 s'étend une crémaillère 35 apte à coopérer avec un pignon 37 monté sur l'arbre 39 d'un moteur 41 lui-même fixé sur une extension 43 de la poutre 25, comme cela est visible notamment sur les figures 3 et 4.

Il est a noter que l'ensemble de guidage de la VFN peut être inversé c'est-à-dire que la glissière peut être intégrée au premier coulisseau longitudinal 29 à la place du coulisseau longitudinal 33. Dans cette configuration l'entraînement par le pignon 37 peut se faire dans le plan supérieur de l'axe de la glissière.

De même l'ensemble pignon crémaillère peut être placé à un endroit autre que le système glissière coulisseau comme la structure latérale de la tuyère de sortie 13.

Comme cela est donc compréhensible à ce stade, le moteur électrique 41 est susceptible d'entraîner le coulissement de la deuxième glissière 31 par rapport au deuxième coulisseau 33, c'est-à-dire le coulissement de la tuyère de sortie 13 par rapport au capot intérieur 11.

L'actionnement de ce capot intérieur 11 est quant à lui effectué par une pluralité de vérins dont l'un 45 est visible à la figure 2, ce vérin étant fixé à une extrémité sur le cadre avant 21, et à l'autre extrémité sur le capot intérieur 11.

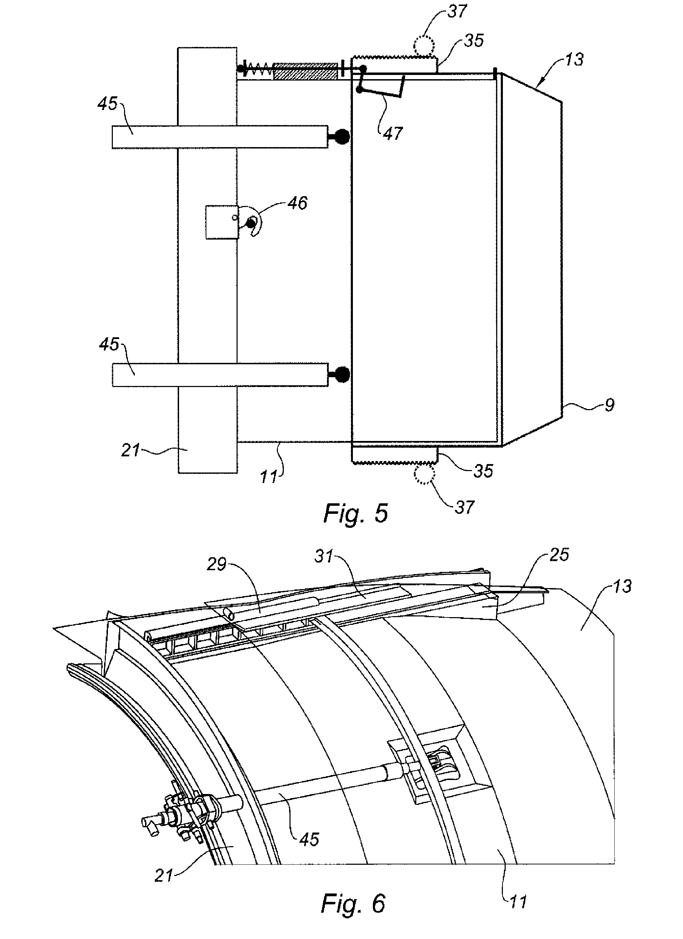

Les principaux organes qui viennent d'être décrits sont représentés de manière schématique à la figure 5, correspondant à une configuration jet direct et de croisière.

Dans cette configuration, le capot intérieur d'inverseur de poussée 11 est dans sa position amont, et verrouillé par un premier verrou 46 au cadre avant 21.

Les vérins d'actionnement 45 se trouvent en position rétractée.

La tuyère d'éjection 13 se trouve en position amont par rapport au capot intérieur 11, c'est-à-dire que les pignons moteurs 37 (il y en a en réalité deux par demi-nacelle, un dans la partie supérieure de cette demi-nacelle, et un autre dans la partie inférieure) se trouvent chacun en aval de leur crémaillère 35 associée.

Un deuxième verrou 47, apte à solidariser la tuyère d'éjection 13 avec le capot intérieur 11, se trouve en position ouverte.

Cette configuration correspond au vol de croisière, dans lequel il faut bien entendu que les moyens d'inversion de poussée soient inactifs, et que la section de sortie 9 de la tuyère de sortie 13 soit minimale.

On se reporte à présent aux figures 6 à 8, correspondant à une situation de décollage ou d'atterrissage.

Dans cette situation, il incombe de pouvoir augmenter la section 9 de la tuyère de sortie 13, et pour cela, il faut déplacer cette tuyère de sortie en aval de sa position représentée aux figures 1 à 5.

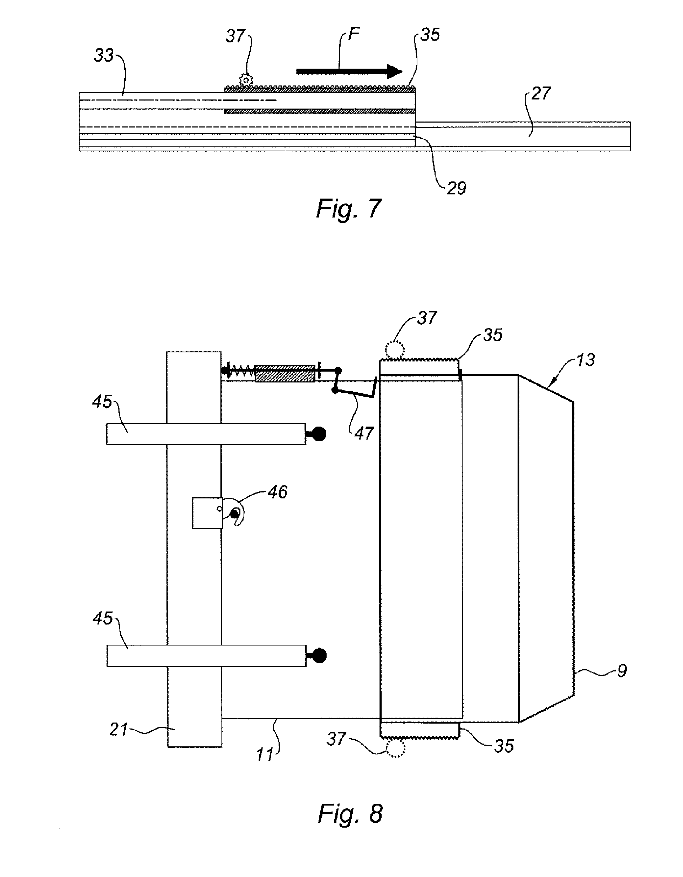

On réalise cela en faisant tourner les pignons 37 au moyen de leurs moteurs respectifs 41, ce qui a pour effet de déplacer chaque crémaillère 35 vers l'aval, comme indiqué par la flèche F de la figure 7.

Ce faisant, la tuyère de sortie 13 rejoint sa position aval visible sur les figures 6 et 8, le capot intérieur d'inversion de poussée 11 n'ayant quant à lui pas bougé.

Maintenant, lorsqu'on souhaite réaliser l'inversion de poussée (voir figure 9) pour l'atterrissage, on libère le premier verrou 46, et on actionne les vérins 45, de manière à faire coulisser l'ensemble formé par le capot intérieur 11 et la tuyère de sortie 13 le long de la première glissière 27, comme représenté à la figure 10.

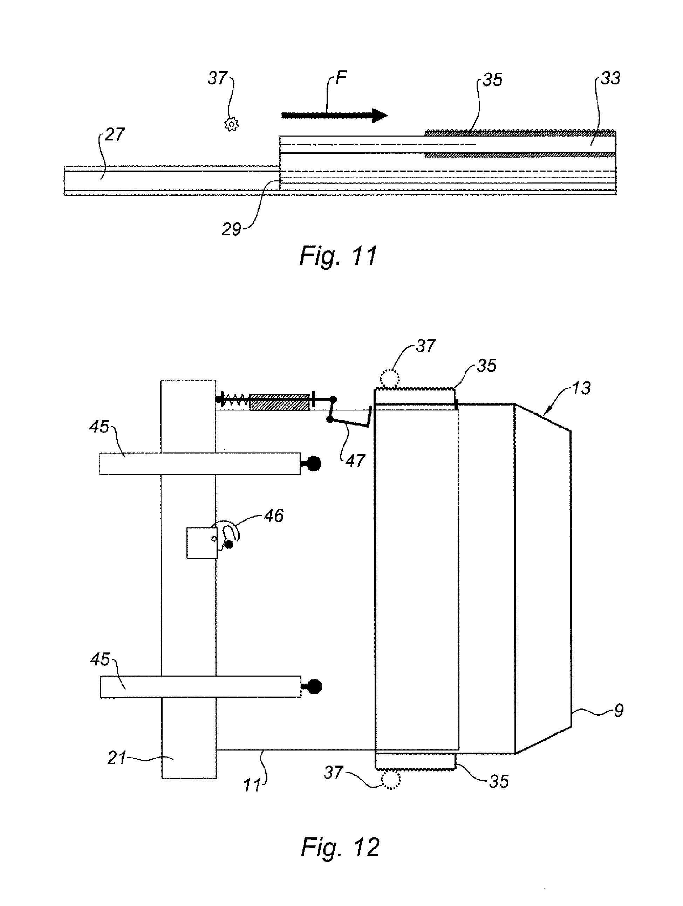

Plus précisément, comme cela est visible à la figure 11, sur laquelle le coulissement de ces deux organes de concert est indiqué par la flèche F, chaque crémaillère 35 échappe à son pignon moteur respectif 37.

De manière plus précise, on se reporte aux figures 12 à 14, sur lesquelles on peut voir le séquencement des différents organes intervenant lors du passage en position d'inversion de poussée.

Comme cela est visible à la figure 12, la tuyère de sortie 13 se trouvant donc en position aval, on libère le verrou 46.

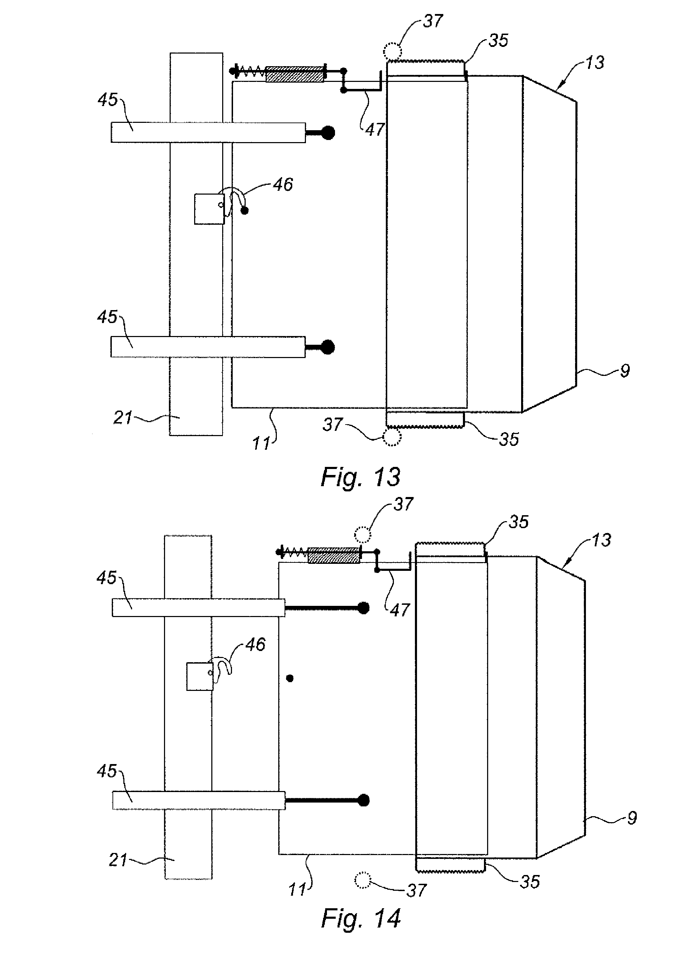

Ensuite, comme visible à la figure 13, on ferme le deuxième verrou 47, de manière à solidariser la tuyère de sortie 13 avec le capot intérieur d'inversion de poussée 11.

On actionne alors les vérins 45, permettant de déplacer de concert ce capot et cette tuyère vers leur position aval, provoquant l'échappement de chaque pignon 37 de sa crémaillère respective 35 (voir figure 14).

Dans cette position d'inversion de poussée, sous l'action des bielles 17, les volets d'inversion de poussée 15 entravent la veine de flux secondaire 5, et provoquent le renvoi d'air secondaire vers l'extérieur et vers l'avant de la nacelle, comme cela est indiqué par la flèche 7 de la figure 9.

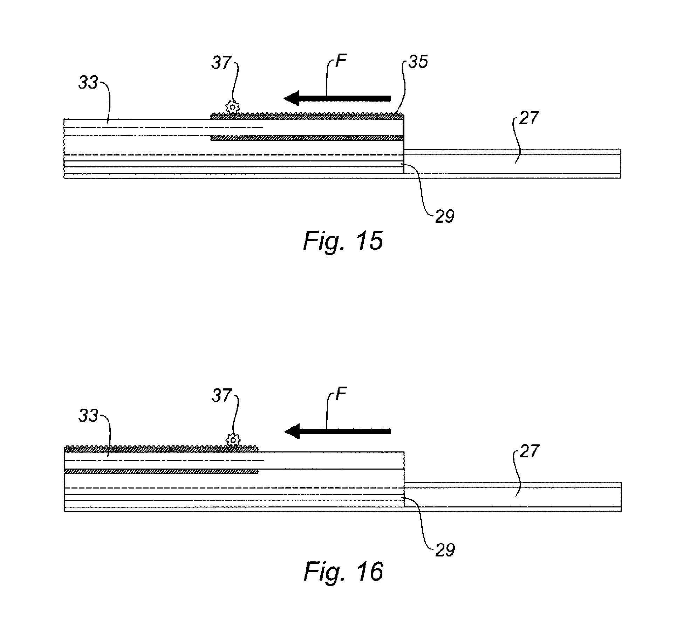

Le retour de la nacelle selon l'invention à sa position initiale s'effectue en deux étapes : comme cela est visible à la figure 15, on commence tout d'abord par rétracter les vérins 45 de manière à ramener l'ensemble formé par le capot intérieur d'inversion de poussée 11 et la tuyère de sortie 13 vers la position jet direct, ce mouvement d'ensemble étant représenté par la flèche F de la figure 15.

Ce faisant, chaque crémaillère 35 revient en prise avec son pignon moteur 37 associé.

Puis, pour ramener la tuyère de sortie 13 vers sa position amont (petite section, correspondant à une situation de croisière), on fait tourner les pignons 37 au moyen de leurs moteurs respectifs 41 dans le sens inverse de celui de la figure 7, jusqu'à ce que la partie amont 23 de la tuyère de sortie 13 vienne recouvrir complètement les grilles d'inversion de poussée 19.

Comme on peut le comprendre à la lumière de ce qui précède, l'actionnement indépendant du capot intérieur d'inversion de poussée 11 et de la tuyère de sortie 13 peut être effectué avec des moyens beaucoup plus légers que ceux de la technique antérieure, le système à pignon et à crémaillère présentant un encombrement et un poids nettement inférieurs à ceux des systèmes à deux vérins ou à vérins à double tige de la technique antérieure.

L'un des points particuliers de l'invention réside dans le fait qu'il faut pouvoir s'assurer que chaque crémaillère 35 revienne bien en prise avec son pignon moteur 37 associé, nonobstant les jeux et déformations qui peuvent intervenir.

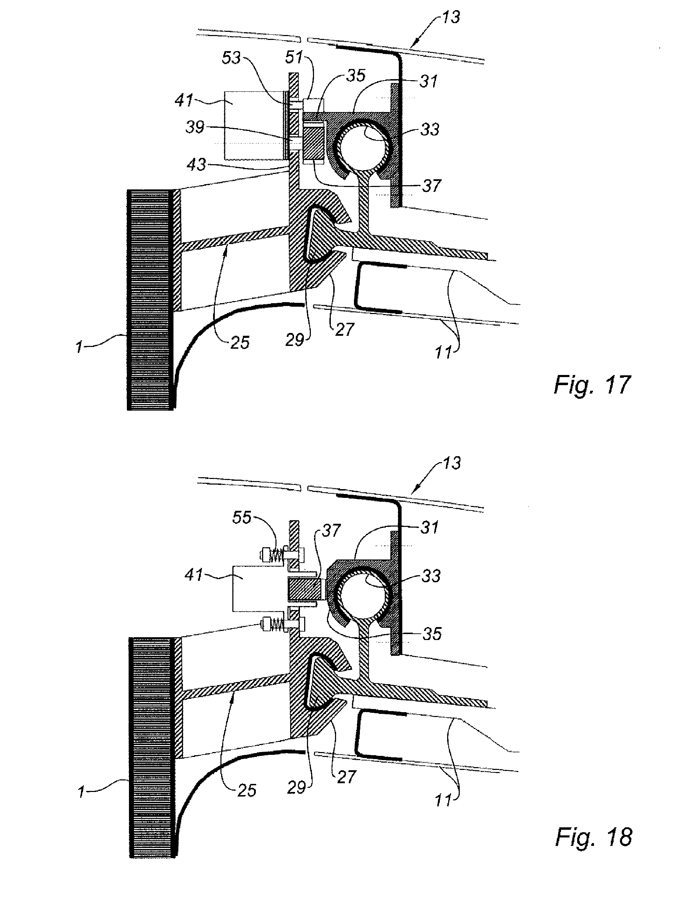

Pour cela, il convient de prévoir un système de rattrapage de jeu, pouvant comprendre par exemple, comme cela est représenté à la figure 17, un galet 51 monté fou sur la poutre 25, d'axe 53 parallèle à l'arbre 39 du moteur 41, et apte à rabattre la crémaillère 35 au contact des dents du pignon 37, lorsque cette crémaillère revient de la position représentée à la figure 11 à la position représentée à la figure 15.

De manière alternative, comme cela est représenté à la figure 18, on peut prévoir que les moteurs 41 soient reliés par des moyens de suspension élastiques 55 à la poutre fixe 25, les pignons 37 pivotant autour d'un axe sensiblement vertical, c'est-à-dire parallèle au grand bord de la planche de dessin 9/9 ci-annexée.

Bien entendu, la présente invention n'est nullement limitée au mode de réalisation décrit et représenté.

C'est ainsi par exemple que l'on pourrait envisager de se dispenser du deuxième verrou 47 de liaison du capot d'inversion interne 11 avec la tuyère de sortie 13, étant observé que le flux d'air secondaire ainsi que l'air extérieur ont naturellement tendance à maintenir la tuyère de sortie 17 dans sa position la plus aval possible par rapport au capot intérieur 11.

## Revendications

1. Nacelle pour moteur d'aéronef, comprenant un capot d'inversion de poussée (11) monté coulissant entre une position de jet direct et une position de jet inversé, une tuyère de sortie (13) de section variable disposée dans le prolongement aval de ce capot d'inversion (11), et des moyens d'actionnement respectif de ce capot (11) et de cette tuyère de sortie (13), **caractérisée**
**en ce que** ladite tuyère de sortie (13) est montée coulissante sur ledit capot d'inversion de poussée (11), et lesdits moyens d'inversion de poussée comprennent :
- au moins un vérin (45) d'actionnement dudit capot d'inversion de poussée (11),
- au moins un pignon moteur (37) monté rotatif sur la structure fixe (25) de ladite nacelle, et
- au moins une crémaillère (35) d'actionnement de ladite tuyère de sortie (13), solidaire de cette tuyère de sortie (13) et engrenant avec
ledit pignon moteur (37) lorsque ledit capot d'inversion de poussée (11) se trouve en position jet direct, et échappant à ce pignon lorsque ledit capot d'inversion (11) se trouve en position de jet inversé.

2. Nacelle selon la revendication 1, **caractérisée en ce qu'**elle comprend une pluralité de vérins (45) d'actionnement dudit capot d'inversion de poussée (11), et une pluralité de dispositifs à pignon (37) et crémaillère (35) pour actionner ladite tuyère de sortie (13).

3. Nacelle selon la revendication 2, **caractérisée en ce que** lesdits dispositifs à pignon (37) et crémaillère (35) sont disposés au voisinage des poutres 12 heures et 6 heures de la structure fixe de ladite nacelle.

4. Nacelle selon l'une quelconque des revendications précédentes, **caractérisée en ce qu'**elle comprend des moyens (47) pour verrouiller ladite tuyère (13) audit capot d'inversion de poussée (11) lorsque ladite tuyère de sortie (13) se trouve dans sa position aval extrême et que le capot d'inversion de poussée (11) se trouve en position de jet direct.

5. Nacelle selon l'une des revendications 2 ou 3, **caractérisée en ce qu'**elle comprend des moyens de rattrapage du jeu entre chaque pignon (37) et sa crémaillère (35) associée.

6. Nacelle selon la revendication 5, **caractérisée en ce que** lesdits moyens de rattrapage de jeu comprennent des moyens de suspension élastique (55) dudit pignon (37) sur la structure fixe (25) de la nacelle.

7. Nacelle selon la revendication 5, **caractérisée en ce que** lesdits moyens de rattrapage de jeu comprennent au moins un galet (51) d'axe (53) parallèle à celui (39) dudit pignon (37), apte à ramener ladite crémaillère (35) au contact dudit pignon (37).

## Patentansprüche

1. Gondel für Luftfahrzeugmotor, die eine Schubumkehrerhaube (11) umfasst, die gleitend zwischen einer Direktstrahlposition und einer umgekehrten Strahlposition montiert ist, wobei eine Auslassdüse (13) mit variablem Querschnitt in der stromabwärtigen Verlängerung dieser Schubumkehrerhaube (11) angeordnet ist, und Mittel zum jeweiligen Betätigen dieser Haube (11) und dieser Auslassdüse (13), **dadurch gekennzeichnet,**
**dass** die Auslassdüse (13) gleitend auf der Schubumkehrerhaube (11) montiert ist und dass die Schubumkehrmittel Folgendes umfassen:
- Mindestens einen Betätigungszylinder (45) der Schubumkehrerhaube (11),
- mindestens ein Antriebsritzel (37), das drehend auf der stationären Struktur (25) der Gondel montiert ist, und
- mindestens eine Betätigungszahnstange (35) der Aulassdüse (13), die mit dieser Auslassdüse (13) fest verbunden ist und in das Antriebsritzel (37) eingreift, wenn die Schubumkehrerhaube (11) in Direktstrahlposition ist, und diesem Ritzel entkommt, wenn die Schubumkehrerhaube (11) in umgekehrter Strahlposition ist.

2. Gondel nach Anspruch 1, **dadurch gekennzeichnet, dass** sie eine Mehrzahl von Betätigungszylindern (45) der Schubumkehrerhaube (11) und eine Mehrzahl von Vorrichtungen mit Ritzel (37) und Zahnstange (35) zum Betätigen der Auslassdüse (13) umfasst.

3. Gondel nach Anspruch 2, **dadurch gekennzeichnet, dass** die Vorrichtungen mit Ritzel (37) und Zahnstange (35) in der Nähe der Träger 12 Uhr und 6 Uhr der stationären Struktur der Gondel angeordnet sind.

4. Gondel nach einem der vorhergehenden Ansprüche, **dadurch gekennzeichnet, dass** sie Mittel (47) zum Verriegeln der Düse (13) auf der Schubumkehrerhaube (11) umfasst, wenn die Auslassdüse (13) in ihrer extremen stromabwärtigen Position ist und die Schubumkehrerhaube (11) in Direktstrahlposition ist.

5. Gondel nach einem der Ansprüche 2 oder 3, **dadurch gekennzeichnet, dass** sie Mittel zum Nachstellen des Spiels zwischen jedem Ritzel (37) und seiner dazugehörenden Zahnstange (35) umfasst.

6. Gondel nach Anspruch 5, **dadurch gekennzeichnet, dass** die Spielnachstellmittel Mittel zum elastischen Aufhängen (55) des Ritzels (37) auf der stationären Struktur (25) der Gondel umfassen.

7. Gondel nach Anspruch 5, **dadurch gekennzeichnet, dass** die Spielnachstellmittel mindestens eine Walze (51) mit Achse (53) parallel zu derjenigen (39) des Ritzels (37) umfassen, die geeignet ist, die Zahnstange (35) zur Berührung des Ritzels (37) zurückzustellen.

## Claims

1. A nacelle for an aircraft engine, comprising a thrust reverser cowl (11) slidably mounted between a direct jet position and a reverse jet position, an outlet nozzle (13) of variable cross-section disposed in the downstream extension of this reverser cowl (11), and means for actuating respectively this cowl (11) and this outlet nozzle (13), **characterized in that** said outlet nozzle (13) is slidably mounted on said thrust reverser cowl (11), and said thrust reversal means comprise:
- at least one cylinder (45) for actuating said thrust reverser cowl (11),
- at least one drive pinion (37) rotatably mounted on the fixed structure (25) of said nacelle, and
- at least one rack (35) for actuating said outlet nozzle (13), secured to this outlet nozzle (13) and meshing with said drive pinion (37) when said thrust reverser cowl (11) is in the direct jet position, and escaping from this pinion when said reverser cowl (11) is in the reverse jet position.

2. The nacelle according to claim 1, **characterized in that** it comprises a plurality of cylinders (45) for actuating said thrust reverser cowl (11), and a plurality of pinion (37) and rack (35) devices for actuating said outlet nozzle (13).

3. The nacelle according to claim 2, **characterized in that** said pinion (37) and rack (35) devices are disposed in the vicinity of beams at 12 o'clock and 6 o'clock of the fixed structure of said nacelle.

4. The nacelle according to any one of the preceding claims, **characterized in that** it comprises means (47) for locking said nozzle (13) to said thrust reverser cowl (11) when said outlet nozzle (13) is in its extreme downstream position and when the thrust reverser cowl (11) is in the direct jet position.

5. The nacelle according to any of claims 2 or 3, **characterized in that** it comprises means for taking up clearance between each pinion (37) and its associated rack (35).

6. The nacelle according to claim 5, **characterized in that** said means for taking up clearance comprise means (55) for elastically suspending said pinion (37) on the fixed structure (25) of the nacelle.

7. The nacelle according to claim 5, **characterized in that** said means for taking up clearance comprise at least one roller (51) with an axis (53) parallel to that (39) of said pinion (37), capable of returning said rack (35) into contact with said pinion (37).
